# EUROPEAN PATENT APPLICATION

(11) **EP 4 501 428 A1**
(43) Date of publication of application: **05.02.2025**
(21) Application number: 23780570.0
(22) Date of filing: 28.03.2023
(51) Int. Cl.: B01D 35/027, B01D 24/00, B01D 29/00, B01D 29/07

(54) **SUCTION STRAINER**

(30) Priority: 31.03.2022 JP 2022059544
(71) Applicant: YAMASHIN-FILTER CORP., Yokohama-shi, Kanagawa 231-0062 (JP)
(72) Inventor: NAKAOKA Hideo, Yokosuka-shi, Kanagawa 239-0847 (JP); KITAJIMA Nobuyuki, Yokosuka-shi, Kanagawa 239-0847 (JP)
(74) Representative: Hasegawa, Kan
(86) International application number: PCT/JP2023/012606
(87) International publication number: WO 2023/190561

(57) **Abstract**

It is possible to prevent bubbles from flowing out of a suction strainer provided with a filtration section along a horizontal direction. A suction strainer provided in a tank in which liquid is stored, the suction strainer includes: a filtration section including a pleated filter having a cylindrical shape formed by bending a thin plate into a pleated shape; an attachment section having a cylindrical shape provided on a side surface of the tank, the attachment section provided with one end of the filtration section; a plate covering an end of the filtration section on a side not provided with the attachment section; and a baffle plate provided adjacent to the filtration section. The filtration section is provided along a horizontal direction, and the filtration section and the plate are provided inside the tank. The baffle plate includes at least one of a first baffle plate provided inside the pleated filter and a second baffle plate provided outside the pleated filter. The first baffle plate is disposed at least above a central axis of the filtration section, and the second baffle plate is disposed at least below the central axis.

## Description

### Technical Field

The present invention relates to a suction strainer.

### Background Art

PTL 1 discloses a suction filter provided with a cover and a valve. The cover is provided at the upper end surface of a cylindrical first filtration section so as to cover the entirety of the upper side of the first filtration section, and the valve is provided at a hollow part of the first filtration section on the lower side of the cover. In the valve, a first valve that is movable along a bar-shaped member is switched between a closed state of closing a hole of the cover and an open state of not closing the hole.

### Citation List

### Patent Literature

PTL 1: Japanese Patent Application Laid-Open No. 2020-22924

### Summary of Invention

### Technical Problem

In the invention described in PTL 1, since the axis of the cylindrical filtration section is along the vertical direction, which is so-called vertical placement, bubbles adhering to the filtration section float inside oil stored in a tank, and the bubbles are released to the outside of the suction filter via a valve. However, due to the restriction of the installation position, a case where the filtration section is provided along a horizontal direction, which is so-called horizontal placement, has been increasing in recent years, and in such a case, bubbles are less likely to float as compared with the case of the vertical placement.

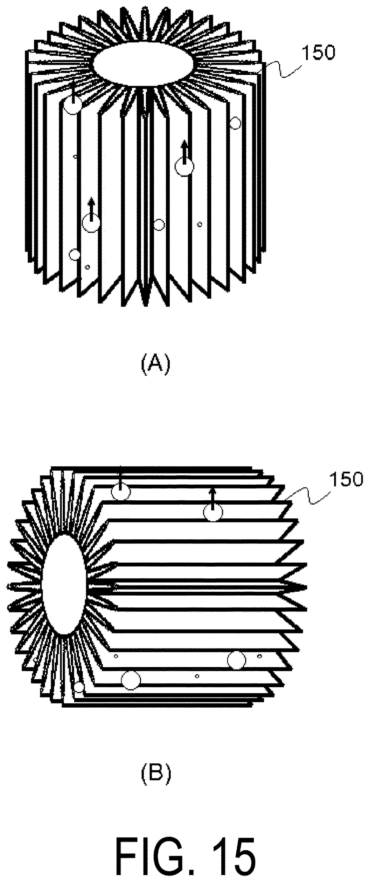

FIG. 15 is views schematically illustrating behavior of bubbles adhering to a filtration section 150, where (A) is an example of vertical placement and (B) is an example of horizontal placement. In the case of vertical placement, the bubbles adhering to the filtration section 150 float upward along the filtration section 150 (see arrows in FIG. 15(A)). On the other hand, in the case of the horizontal placement, the bubbles adhering to the upper half of the filtration section 150 can float upward (see arrows in FIG. 15(B)), but the bubbles adhering to the lower half of the filtration section 150 are blocked by the filtration section 150 and cannot float upward. As a result, the bubbles adhering to the lower half of the filtration section 150 pass through the filtration section 150, and as a result, there are possibilities of break down due to the pump suctioning the air and damage of a component and the like resulting from the bubbles bursting inside the hydraulic circuit or the like.

The present invention has been made in view of such circumstances, and an object is to provide a suction strainer that can prevent bubbles from flowing out when a filtration section is provided along a horizontal direction.

### Solution to Problem

In order to solve the above problems, a suction strainer according to the present invention is, for example, a suction strainer provided in a tank in which liquid is stored, the suction strainer including: a filtration section having a cylindrical shape including a pleated filter having a cylindrical shape formed by bending a thin plate into a pleated shape; an attachment section having a cylindrical shape provided on a side surface of the tank, the attachment section provided with one end of the filtration section; a plate covering an end of the filtration section on a side not provided with the attachment section; and a baffle plate including at least one of a first baffle plate provided inside the pleated filter and a second baffle plate provided outside the pleated filter, in which the filtration section is provided along a horizontal direction, the filtration section and the plate are provided inside the tank, at least a part of the first baffle plate is disposed above a central axis of the filtration section, and at least a part of the second baffle plate is disposed below the central axis.

According to the suction strainer according to the present invention, the filtration section provided along the horizontal direction and the plate covering one end of the filtration section are provided inside the tank in which the liquid is stored. In addition, the suction strainer includes at least one of the first baffle plate provided inside the pleated filter included in the filtration section and the second baffle plate provided outside the pleated filter, at least a part of the first baffle plate is disposed above the central axis of the filtration section, and at least a part of the second baffle plate is disposed below the central axis of the filtration section. This can prevent outflow of bubbles from the suction strainer. As a result, inflow of bubbles into the pump provided downstream of the suction strainer is prevented.

The first baffle plate may include an air reservoir section having a cylindrical shape with one end provided in the attachment section, and a radius of the air reservoir section may gradually decrease along the direction from the attachment section toward the plate. This applies an upward force to the bubbles in contact with the air reservoir section, and the bubbles are less likely to flow into the hollow portion of the attachment section. In addition, since the air reservoir section has a cylindrical shape, more bubbles can be blocked by the air reservoir section.

The first baffle plate may have a cross-sectional shape that is an arc shape when taken along a first plane orthogonal to the central axis, and include an air reservoir section intersecting a line segment connecting an upper end portion of the filtration section and the central axis, the air reservoir section may have one end provided in the attachment section, and a radius of the air reservoir section may gradually decrease along a direction from the attachment section toward the plate. This applies an upward force to the bubbles in contact with the air reservoir section, and the bubbles are less likely to flow into the hollow portion of the attachment section.

The first baffle plate may include an upper cover having a cross-sectional shape that is an arc shape when taken along a first plane orthogonal to the central axis, and provided at a position intersecting a line segment connecting an upper end portion of the filtration section and the central axis, and the upper cover may be provided on the plate side relative to the air reservoir section. This allows more bubbles to be stored in a space above the air reservoir section, and as a result, bubbles flowing out of the suction strainer can be further reduced.

The second baffle plate may be a lower cover having a cross-sectional shape that is an arc shape when taken along a first plane orthogonal to the central axis, and provided at a position intersecting a line segment connecting a lower end portion of the filtration section and the central axis. This blocks the bubbles by the lower cover, and the bubbles hardly flow into the hollow portion of the filtration section.

The pleated filter may include a first pleated filter having a cylindrical shape and a second pleated filter having a cylindrical shape provided inside the first pleated filter, the first baffle plate may be provided inside the second pleated filter, and the second baffle plate may be provided outside the second pleated filter. This can prevent outflow of bubbles from the suction strainer also in a case of including two pleated filters.

The attachment section may be provided with an air vent hole allowing a hollow portion of the attachment section and an external space of the attachment section to communicate with each other, and the air vent hole may accommodates a float movable between a position where the float closes the air vent hole and a position where the float opens the air vent hole. This can discharge bubbles through the air vent hole.

A cover having a cylindrical shape with one end provided on the attachment section and another end provided on the plate may be included, the cover may be provided along a horizontal direction, and a plurality of holes may be provided in a belt-shaped region along a horizontal direction positioned in a vicinity of a lower end of the cover. This can reduce the number of bubbles hitting the filtration section.

### Advantageous Effects of Invention

According to the present invention, it is possible to prevent outflow of bubbles from the suction strainer provided with the filtration section along the horizontal direction.

### Brief Description of Drawings

FIG. 1 is a schematic diagram illustrating a hydraulic circuit 110 including a suction strainer 1.
FIG. 2 is a schematic diagram illustrating the suction strainer 1 and a tank 100.
FIG. 3 is a cross-sectional view schematically illustrating the suction strainer 1.
FIG. 4 is a schematic diagram illustrating a suction strainer 1A.
FIG. 5 is a cross-sectional view schematically illustrating a suction strainer 2.
FIG. 6 is schematic diagrams illustrating a suction strainer 3, where (A) is a cross-sectional view and (B) is a cross-sectional view of the suction strainer 3 taken along plane A-A.
FIG. 7 is schematic diagrams illustrating a suction strainer 3A, where (A) is a cross-sectional view and (B) is a cross-sectional view of the suction strainer 3A taken along plane B-B.
FIG. 8 is a cross-sectional view schematically illustrating a suction strainer 4.
FIG. 9 is schematic diagrams illustrating a suction strainer 5, where (A) is a cross-sectional view and (B) is a perspective view.
FIG. 10 is a cross-sectional view schematically illustrating the suction strainer 5 taken along plane C-C.
FIG. 11 is schematic diagrams illustrating a suction strainer 5A, where (A) is a perspective view, and (B) is a cross-sectional view when taken along a plane orthogonal to a central axis ax.
FIG. 12 is schematic diagrams illustrating a suction strainer 5B, where (A) is a perspective view, and (B) is a cross-sectional view when taken along a plane orthogonal to the central axis ax.
FIG. 13 is a cross-sectional view schematically illustrating a suction strainer 6.
FIG. 14 is a cross-sectional view schematically illustrating a suction strainer 7.
FIG. 15 is views schematically illustrating behavior of bubbles adhering to the filtration section, where (A) is an example of vertical placement, and (B) is an example of horizontal placement.

### Description of Embodiments

Embodiments of the present invention are elaborated below with reference to the accompanying drawings.

### First Embodiment

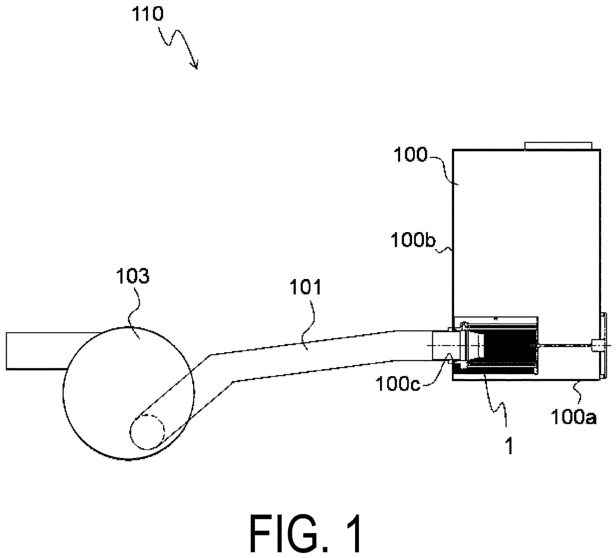

FIG. 1 is a schematic diagram illustrating a hydraulic circuit 110 including a suction strainer 1 according to an embodiment of the present invention. In FIG. 1, hatching indicating a cross section is omitted.

The tank 100 is installed in a work machine (e.g., a hydraulic apparatus) not illustrated in the drawing. The tank 100 is a tank for storing the hydraulic fluid and is provided in a hydraulic circuit 110 of the hydraulic fluid to be supplied to the hydraulic apparatus. Note that the component provided in the tank 100 is not limited to the hydraulic circuit, and the liquid stored in the tank 100 is also not limited to the hydraulic fluid.

The tank 100 has a box shape that is hollow inside, for example. The tank 100 mainly includes inside the suction strainer 1 and a return filter (omitted in the drawing).

In the hydraulic circuit 110, the hydraulic fluid is introduced to the tank 100 through a hydraulic apparatus not illustrated in the drawing. In the tank 100, an inlet (omitted in the drawing) that allows the hydraulic fluid to flow into the tank 100 is formed. The hydraulic fluid having entered from the inlet is guided to the return filter. The hydraulic fluid is filtered by the return filter, and stored in the tank 100.

In the vicinity of the lower end portion of a side surface 100b of the tank 100 (in the present embodiment, a position in the vicinity of a bottom surface 100a in the side surface of the tank 100), an outlet 100c that allows the hydraulic fluid inside the tank 100 to flow out to a hydraulic pump 103 is formed. The outlet 100c is provided with the suction strainer 1. The suction strainer 1 has a cylindrical shape and is provided along the horizontal direction.

The suction strainer 1 is provided with a suction pipe 101 extending from the outer side of the tank 100 to the suction port of the hydraulic pump 103. The hydraulic fluid stored in the tank 100 is suctioned by the hydraulic pump 103, carried to the suction pipe 101 through the suction strainer 1, and supplied to the hydraulic apparatus again.

Note that the outlet 100c and the suction strainer 1 need only to be provided at the side surface 100b of the tank 100, and the positions of the outlet 100c and the suction strainer 1 are not limited to the positions illustrated in FIG. 1.

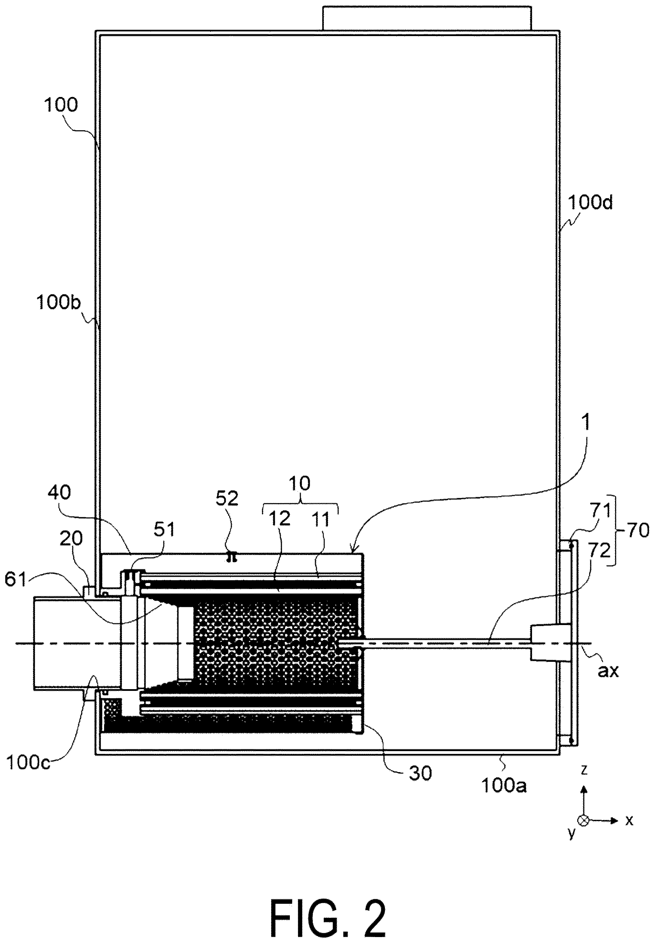

FIG. 2 is a schematic diagram illustrating the suction strainer 1 and a tank 100. In the following description, the extending direction of the suction strainer 1 (the extending direction of a central axis ax of the suction strainer 1) is the x direction, and the vertical direction is the z direction (vertically upward is the +z direction). In addition, the direction orthogonal to the x direction and the z direction is the y direction.

The suction strainer 1 mainly includes a filtration section 10, an attachment section 20, a plate 30, a cover 40, floats 51 and 52, a baffle plate 61, and an attachment section 70. The attachment section 20 is provided on a side surface 100b of the tank 100, and the attachment section 70 is provided on a side surface 100d of the tank 100.

The attachment section 70 includes a plate-shaped portion 71 and a bar-shaped member 72. When the plate-shaped portion 71 is attached to the side surface 100d, the plate 30 attached to the bar-shaped member 72 is pushed in a -x direction, whereby the suction strainer 1 is provided inside the tank 100.

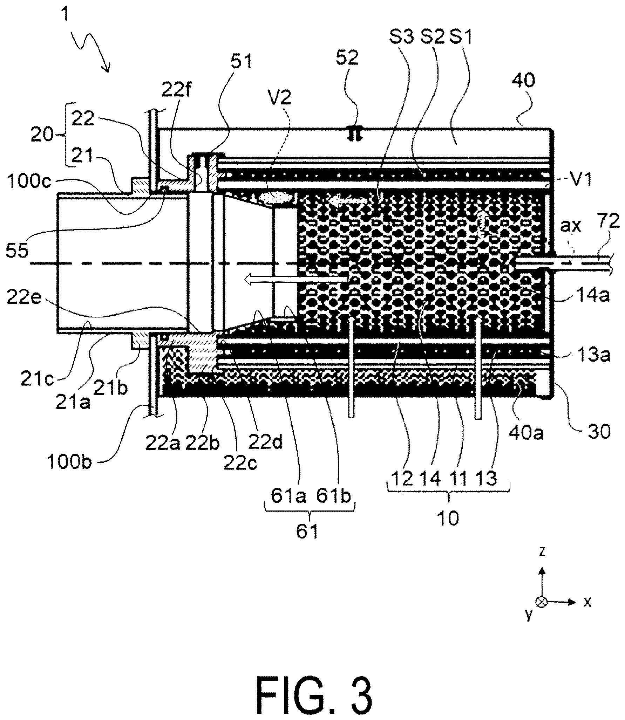

FIG. 3 is a cross-sectional view schematically illustrating the suction strainer 1. FIG. 3 partially omits hatching indicating a cross section.

The filtration section 10 mainly includes pleated filters 11 and 12 and inner cylinders 13 and 14. The inner cylinders 13 and 14 are provided inside the pleated filters 11 and 12, respectively.

The pleated filters 11 and 12 are members that filter a hydraulic fluid, and have a cylindrical shape (here, a circular cylindrical shape). The heights of the pleated filters 11 and 12 are substantially the same. The pleated filters 11 and 12 are formed by pleating a sheet-like thin plate having holes formed in substantially the entire area, connecting both ends of the pleated thin plate, and rounding the pleated thin plate into a cylindrical shape. Thus, the pleated filters 11 and 12 are formed in a substantially circular cylindrical pleated shape. Note that in the present embodiment, the pleated filter 12 is formed of a wire mesh made of fine metal (e.g., stainless steel) in which thin wires are knitted in a mesh shape, but filter paper using synthetic resin, paper, or the like may be used.

The diameter of the pleated filter 12 (corresponding to the second pleated filter of the present invention) is smaller than the diameter of the pleated filter 11 (corresponding to the first pleated filter of the present invention), and the pleated filter 12 is provided inside the pleated filter 11.

The inner cylinders 13 and 14 are members having a cylindrical shape (here, a circular cylindrical shape) having openings at both ends, and are formed using a material having high corrosion resistance (e.g., stainless steel). The heights of the inner cylinders 13 and 14 are substantially the same as the heights of the pleated filters 11 and 12. The diameter of the inner cylinder 13 is smaller than a diameter of the pleated filter 11, and the inner cylinder 13 is provided inside the pleated filter 11. In addition, the diameter of the inner cylinder 14 is smaller than the diameter of the pleated filter 12, and the inner cylinder 14 is provided inside the pleated filter 12.

Holes 13a and 14a through which the hydraulic fluid passes are formed substantially entirely in the inner cylinders 13 and 14. The hydraulic fluid having passed through the pleated filter 11 passes through the hole 13a and flows into the inner cylinder 13. The hydraulic fluid flowing into the inner cylinder 13 passes through the pleated filter 12, passes through the hole 14a, and flows into the inner cylinder 14.

The attachment section 20 is provided at one (-x side) end of the filtration section 10, and the plate 30 is provided at the other (+x side) end. The attachment section 20 and the plate 30 are formed using a material (resin or metal) having high corrosion resistance.

The attachment section 20 has a cylindrical shape as a whole and is provided on the side surface 100b. The attachment section 20 is provided with one (-x side) end of the filtration section 10.

The attachment section 20 mainly includes a first attachment section 21 having a cylindrical shape provided on the side surface 100b (see FIG. 2) and a second attachment section 22 having a cylindrical shape attached with the filtration section 10.

The first attachment section 21 has a cylindrical portion 21a to be inserted into the outlet 100c and a flange portion 21b abutting on the side surface 100b. A part of the cylindrical portion 21a and the flange portion 21b are provided outside the tank 100.

The second attachment section 22 is provided in the first attachment section 21, and includes a cylindrical portion 22a into which the cylindrical portion 21a is inserted, and a plate-shaped portion 22b provided with the filtration section 10. The second attachment section 22 is provided inside the tank 100.

When the plate-shaped portion 71 (not illustrated in FIG. 3) is attached to the side surface 100d, the plate 30, that is, the second attachment section 22 is pushed in the -x direction by the bar-shaped member 72. This integrates the first attachment section 21 and the second attachment section 22 in a state where the end on the -x side of the cylindrical portion 22a abuts on the side surface 100b and the cylindrical portion 21a is inserted into a hollow portion of the cylindrical portion 22a.

The cylindrical portion 21a is inserted into the cylindrical portion 22a, and an elastic member 55 (e.g., an O-ring) is provided between the cylindrical portion 21a and the cylindrical portion 22a, thereby integrating a hollow portion 21c of the cylindrical portion 21a and a hollow portion 22e of the cylindrical portion 22a. The hollow portion of the attachment section 20, that is, the hollow portion 21c and the hollow portion 22e allow a hollow portion (space S3) of the filtration section 10 and the outside of the tank 100 (the inside of the suction pipe 101) to communicate with each other.

The plate-shaped portion 22b has recess portions 22c and 22d. The recess portion 22c is provided with the pleated filter 11 and the inner cylinder 13, and the recess portion 22d is provided with the pleated filter 12 and the inner cylinder 14. Due to this, the attachment section 20 is provided with the filtration section 10, and the filtration section 10 is extended along the horizontal direction.

The plate-shaped portion 22b is provided with an air vent hole 22f. The air vent hole 22f is provided at a vertically upper end of the plate-shaped portion 22b. The air vent hole 22f allows the hollow portion 22e and an external space (here, space S1) of attachment section 20 to communicate with each other. Here, the space S1 is a space between the filtration section 10 and the attachment section 20, and the cover 40.

The float 51 is provided at an upper end of the air vent hole 22f. The float 51 is movable in an up-down direction (z direction) between a position where the float 51 closes the air vent hole 22f and a position where the float 51 opens the air vent hole 22f. When bubbles flowing into the air vent hole 22f from the hollow portion of the attachment section 22 or the suction pipe 101 flow into the air vent hole 22f, grow in the air vent hole 22f, and push up the float 51 in the +z direction, the air vent hole 22f is opened. This can discharge the air stored in the hollow portion of the attachment section 20 and the suction pipe 101 to the space S1 via the air vent hole 22f.

The cover 40 is a cylindrical member and is extended along the horizontal direction. A belt-shaped region along the horizontal direction positioned in a vicinity of a lower end of the cover 40 is provided with a plurality of holes 40a. Note that the cover 40 is not essential.

The cover 40 has one end provided on the side surface 100b, and the other end provided on the plate 30. That is, the plate 30 covers ends (openings) of the filtration section 10 and the cover 40. Due to this, the hydraulic fluid flows into the space S1 from the hole 40a and flows into a space S2 and the space S3 from the filtration section 10. Here, the space S2 is a space between the pleated filter 11 and the pleated filter 12.

The cover 40 is provided with a hole not illustrated, and this hole is provided with a float 52. The float 52 is movable in the up-down direction (z direction) between a position where the float 52 closes the hole and a position where the float 52 opens the hole.

The baffle plate 61 (corresponding to the first baffle plate of the present invention) is provided inside the filtration section 10. The baffle plate 61 has a cylindrical shape as a whole, and has one end provided in the attachment section 20. The baffle plate 61 mainly includes an air reservoir section 61a having a cylindrical shape and an extension cylinder 61b having a cylindrical shape provided in the air reservoir section 61a. The radius of the air reservoir section 61a is large on the attachment section 20 side, and the radius gradually decreases toward the plate 30. The radius of the extension cylinder 61b is the same as the minimum radius of the air reservoir section 61a. Note that the extension cylinder 61b is not essential.

Next, the function of the suction strainer 1 configured as described above will be described with reference to FIG. 3. After the suction strainer 1 is horizontally attached to the tank 100, the hydraulic fluid is stored in the tank 100.

Since the attachment section 20 is provided at one end of the filtration section 10 and the plate 30 is provided at the other end, when suctioned by the hydraulic pump 103 (not illustrated in FIG. 3) as indicated by hollow arrow in FIG. 3, the hydraulic fluid stored in the tank 100 is suctioned into the space S1 from the outside of the cover 40 through the hole 40a, is suctioned into the space S2 from the space S1 through the pleated filter 11 and the inner cylinder 13, is suctioned into the space S3 from the space S2 through the pleated filter 12 and the inner cylinder 14, and flows out from the space S3 to the suction pipe 101 through the hollow portion 21c and the hollow portion 22e.

Since the hydraulic fluid is sucked by the hydraulic pump 103, the floats 51 and 52 are pulled in the -z direction together with the hydraulic fluid, the float 51 abuts on the plate-shaped portion 22b and closes the air vent hole 22f, and the float 52 closes the hole of the cover 40. Due to this, the hydraulic fluid does not flow into the space S3 from portions other than the hole 40a and the filtration section 10.

When the hydraulic fluid is suctioned into the space S3, bubbles V1 contained in the hydraulic fluid are also suctioned into the filtration section 10 together with the hydraulic fluid. The bubbles V1 flow in the +z direction and the -x direction along the flow of the hydraulic fluid (see dotted arrows (hatched) in FIG. 3) and abut on the baffle plate 61. Then, the bubbles V1 accumulate in a space between the baffle plate 61 (air reservoir section 61a) and the filtration section 10 and above (+z side) the baffle plate 61, and grow into large bubbles V2.

When the hydraulic pump 103 (not illustrated in FIG. 3) stops, the flow of the hydraulic fluid stops. As a result, the bubbles V2 accumulated above the baffle plate 61 are discharged to the space S1 via the filtration section 10. When the bubbles V2 are discharged in the space S1, grow, and push up the float 52 in the +z direction, the holes of the cover 40 are opened, and air is released from the space S1 to the outside of the suction strainer 1.

According to the present embodiment, the bubbles V1 flowing into the space S3 can be prevented from flowing out from the suction strainer 1 provided along the horizontal direction by retaining the bubbles V2 in the space S3 by the baffle plate 61. As a result, accumulation of bubbles in the suction pipe 101 and defects due to the pump suctioning the air can be prevented. In addition, damage of a component and the like resulting from the air bubbles bursting inside the hydraulic circuit or the like, which causes a temperature and a pressure of the hydraulic fluid to temporarily increase to a significant degree, can be prevented.

In addition, according to the present embodiment, since the air reservoir section 61a having a radius large on the attachment section 20 side, and the radius gradually decreases toward the plate 30 is included, an upward force is applied to the bubbles V2 abutting on the air reservoir section 61a, and the bubbles V2 are less likely to flow into the hollow portion of the attachment section 20.

According to the present embodiment, even if bubbles accumulate in the suction pipe 101, the bubbles can be discharged through the air vent hole 22f.

In addition, according to the present embodiment, since the baffle plate 61 has a cylindrical shape, even if the bubbles V1 flow in the -x direction before floating in the +z direction, the bubbles V1 are blocked by the baffle plate 61, and the bubbles V2 can be formed on the upper side of the baffle plate 61. Therefore, outflow of bubbles from the suction strainer 1 can be prevented.

In addition, according to the present embodiment, since the cover 40 in which the plurality of holes 40a are formed is provided in the belt-shaped region along the horizontal direction positioned in the vicinity of the lower end, the bubbles formed when flowing into the tank from the return filter hardly hit the filtration section 10. This reduces the number of bubbles V1 hitting the filtration section 10, and can reduce inflow of the bubbles V1 into the space S3.

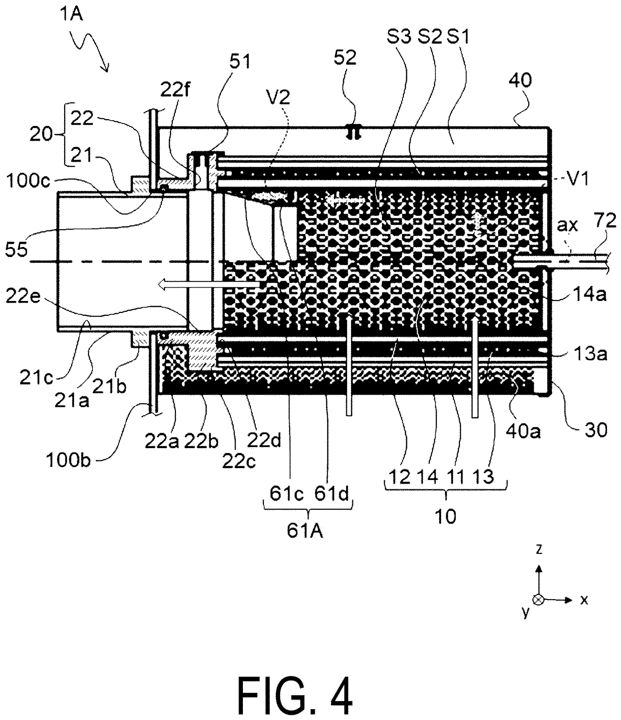

Note that in the present embodiment, the baffle plate 61 has a cylindrical shape, but the baffle plate 61 is not limited to a cylindrical shape. The baffle plate may be disposed at least above the central axis ax of the filtration section 10. FIG. 4 is a schematic diagram illustrating a suction strainer 1A having a baffle plate 61A having a semicircular shape in cross-sectional view. Note that FIG. 4 partially omits hatching indicating a cross section.

The difference between the suction strainer 1A and the suction strainer 1 is only the baffle plate 61A. The baffle plate 61A (corresponding to the first baffle plate of the present invention) is provided inside the filtration section 10. The baffle plate 61A has a semicircular shape in cross-sectional view when taken along a plane (plane parallel to a yz plane, corresponding to the first plane of the present invention) orthogonal to the central axis ax. That is, the baffle plate 61A may be disposed at least above the central axis ax of the filtration section 10, and a part of the baffle plate 61A may be disposed at the same height as the central axis ax or may be disposed below the central axis ax.

The baffle plate 61A includes an air reservoir section 61c and an extension portion 61d provided in the air reservoir section 61c. The air reservoir section 61c is a half on the +z side of the air reservoir section 61a, and is inclined such that the radius is large on the attachment section 20 side and the radius gradually decreases toward the plate 30. The extension portion 61d is a half on the +z-side of the extension cylinder 61b. The radius of the extension portion 61d is the same as the minimum radius of the air reservoir section 61a. The air reservoir section 61c and the extension portion 61d intersect a line segment connecting the upper end portion of the filtration section 10 and the central axis ax. Note that the extension portion 61d is not essential.

Note that the cross-sectional shape of the baffle plate 61A when taken along a plane orthogonal to the central axis ax is not limited to a semicircular shape, and may be an arc shape. That is, the baffle plate 61A may be a part on the +z side of the baffle plate 61, and the baffle plate 61A may intersect the line segment connecting the upper end portion of the filtration section 10 and the central axis ax.

This can prevent the bubbles V1 flowing into the space S3 from flowing out from the suction strainer 1A by retaining the bubbles V2 in the space S3 by the baffle plate 61A.

### Second Embodiment

In the first embodiment of the present invention, the filtration section 10 includes the two pleated filters 11 and 12, but the number of pleated filters included in the filtration section 10 is not limited to this.

The second embodiment of the present invention is a form in which the filtration section includes one pleated filter. Below, description is given of a suction strainer 2 according to the second embodiment. Note that the same components as those in the first embodiment are denoted by the same reference numerals, and descriptions thereof will be omitted.

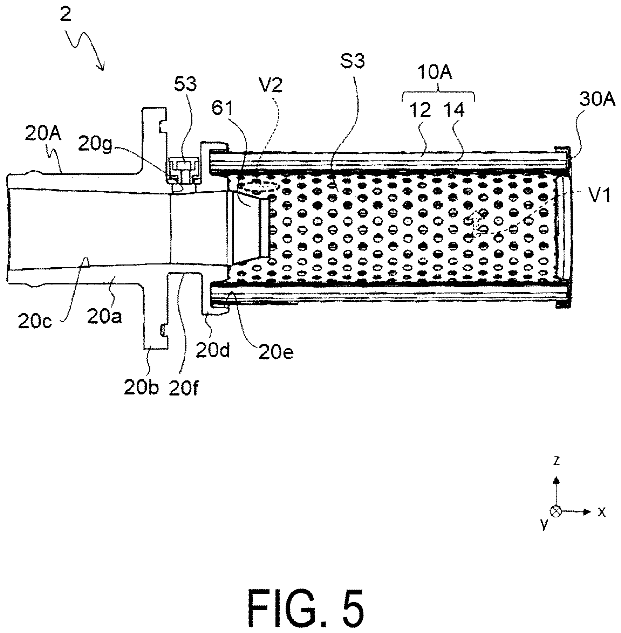

FIG. 5 is a cross-sectional view schematically illustrating a suction strainer 2. In FIG. 5, hatching for indicating a cross section is omitted.

The suction strainer 2 mainly includes a filtration section 10A, an attachment section 20A, a plate 30A, a float 53, and the baffle plate 61. The attachment section 20A is provided on the side surface 100b (not illustrated in FIG. 5) of the tank 100 (not illustrated in FIG. 5).

The filtration section 10A includes the pleated filter 12 and the inner cylinder 14. The attachment section 20A is provided at one end (-z side) of the filtration section 10A, and the plate 30A is provided at the other end (+z side). The attachment section 20A and the plate 30A cover the ends of the filtration section 10A, respectively.

The attachment section 20A mainly includes a cylindrical portion 20a into which the suction pipe 101 (not illustrated in FIG. 5) is inserted, a flange portion 20b abutting on the side surface 100b, an attachment section 20d attached with the filtration section 10A, and a cylindrical portion 20f between the flange portion 20b and the attachment section 20d. The cylindrical portion 20f is inserted into the outlet 100c, and the attachment section 20d is provided inside the tank 100.

The attachment section 20d includes a recess portion 20e into which the filtration section 10A is inserted. When the recess portion 20e is provided with the filtration section 10A, the filtration section 10A is provided in the tank 100 along the horizontal direction (here, x direction).

The cylindrical portion 20a is provided with an air vent hole 20g. The air vent hole 20g is provided at a vertically upper end of the cylindrical portion 20a. The air vent hole 20g allows a hollow portion 20c of the cylindrical portion 20a and an external space of cylindrical portion 20a to communicate with each other.

The float 53 is provided at an upper end of the air vent hole 20g. The float 53 is movable in the up-down direction (z direction) between a position where the float 53 closes the air vent hole 20g and a position where the float 53 opens the air vent hole 20g. When bubbles flowing into the air vent hole 20g from the hollow portion 20c or the suction pipe 101 (not illustrated in FIG. 5) flow into the air vent hole 20g, grow in the air vent hole 20g, and push up the float 53 in the +z direction, the air vent hole 20g is opened. This can discharge, to the outside of the attachment section 20A via the air vent hole 20g, the air stored in the hollow portion of the attachment section 20 and the suction pipe 101.

The baffle plate 61 is disposed inside the filtration section 10A. One end of the baffle plate 61 is provided in the attachment section 20A.

Next, the function of the suction strainer 2 configured as described above will be described. After the suction strainer 2 is horizontally attached to the tank 100, the hydraulic fluid is stored in the tank 100.

Since the attachment section 20A is provided at one end of the filtration section 10A and the plate 30A is provided at the other end, when suctioned by the hydraulic pump 103 (not illustrated in FIG. 5), the hydraulic fluid stored in the tank 100 is suctioned into the space S3 through the pleated filter 12 and the inner cylinder 14, and flows out from the space S3 to the suction pipe 101 through the hollow portion 20c. Since the hydraulic fluid is sucked by the hydraulic pump 103, the float 53 is pulled in the -z direction together with the hydraulic fluid, and the float 53 closes the air vent hole 20g. Due to this, the hydraulic fluid does not flow into the space S3 from portions other than the filtration section 10A.

When the hydraulic fluid is suctioned into the space S3, the bubbles V1 contained in the hydraulic fluid are also suctioned into the filtration section 10 together with the hydraulic fluid. The bubbles V1 flow in the +z direction and the -x direction along the flow of the hydraulic fluid and abut on the baffle plate 61. Then, the bubbles V1 accumulate in a space above (+z side) the baffle plate 61, and grow into the large bubbles V2. Due to this, the bubbles V2 hardly flow out to the hollow portion 20c.

When the hydraulic pump 103 stops, the flow of the hydraulic fluid stops. As a result, the bubbles V2 accumulated above the baffle plate 61 are discharged to the space S1 via the filtration section 10A.

According to the present embodiment, the bubbles V1 flowing into the space S3 can be prevented from flowing out from the suction strainer 2 provided along the horizontal direction by retaining the bubbles V2 in the space S3 by the baffle plate 61.

### Third Embodiment

In the first embodiment of the present invention, the baffle plate 61 includes the air reservoir section 61a and the extension cylinder 61b, but the form of the baffle plate is not limited to this. The third embodiment of the present invention is a form in which the baffle plate includes an upper cover. A suction strainer 3 according to the third embodiment will be described below. Note that the same components as those in the first embodiment are denoted by the same reference numerals, and descriptions thereof will be omitted.

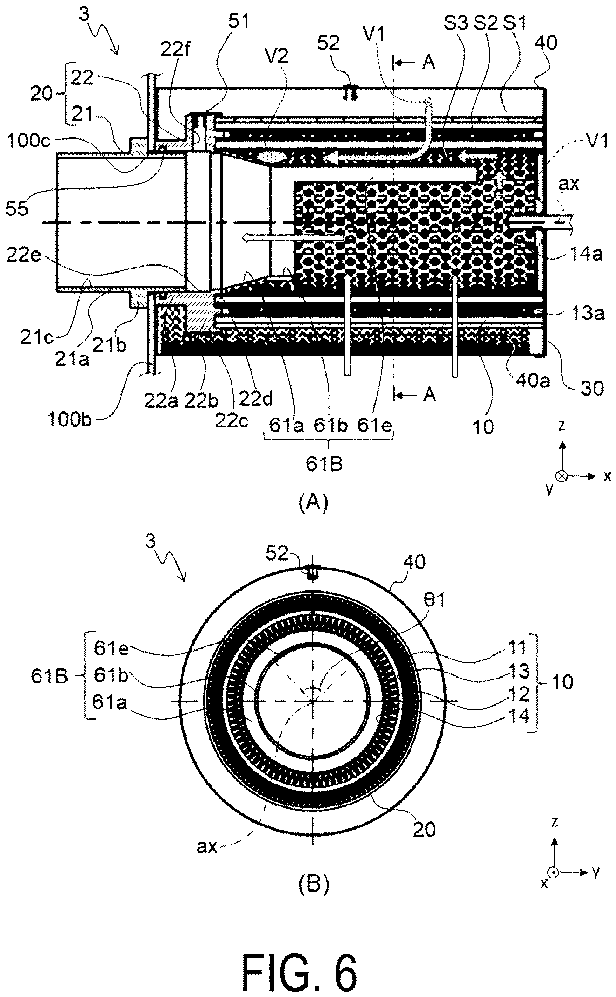

FIG. 6 is schematic diagrams illustrating a suction strainer 3, where (A) is a cross-sectional view and (B) is a cross-sectional view of the suction strainer 3 taken along plane A-A. FIG. 6 partially omits hatching indicating a cross section.

The suction strainer 3 mainly includes the filtration section 10, the attachment section 20, the plate 30, the cover 40, the floats 51 and 52, a baffle plate 61B, and the attachment section 70 (partially not illustrated in FIG. 6).

The baffle plate 61B (corresponding to the first baffle plate of the present invention) is provided inside the filtration section 10. The baffle plate 61B has one end provided in the attachment section 20. The baffle plate 61B mainly includes the air reservoir section 61a having a cylindrical shape, the extension cylinder 61b having a cylindrical shape, and an upper cover 61e.

The upper cover 61e is provided on the plate 30 more than the air reservoir section 61a. In the present embodiment, one end of the upper cover 61e is provided in the extension cylinder 61b, but when the extension cylinder 61b is not provided, the upper cover 61e may be provided in the air reservoir section 61a.

The upper cover 61e has a cross-sectional shape that is an arc shape when taken along a plane (A-A cross section) orthogonal to the central axis ax. In the present embodiment, a central angle θ1 of the upper cover 61e is approximately 90 degrees in the A-A cross section. In addition, the upper cover 61e is provided at a position intersecting a line segment connecting the upper end portion of the filtration section 10 and the central axis ax when taken along a plane (A-A cross section) orthogonal to the central axis ax.

Next, the function of the suction strainer 3 configured as described above will be described. After the suction strainer 3 is horizontally attached to the tank 100, the hydraulic fluid is stored in the tank 100.

Also regarding the suction strainer 3, similarly to the suction strainer 1, when suctioned by the hydraulic pump 103 (not illustrated in FIG. 6), the hydraulic fluid stored in the tank 100 is suctioned into the space S3 from the outside of the cover 40 via the hole 40a and the filtration section 10, and flows out from the space S3 to the suction pipe 101 via the hollow portion 21c and the hollow portion 22e. In addition, the floats 51 and 52 are pulled in the -z direction together with the hydraulic fluid, the float 51 closes the air vent hole 22f, and the float 52 closes the hole of the cover 40. Due to this, the hydraulic fluid does not flow into the space S3 from portions other than the hole 40a and the filtration section 10.

The bubbles V1 contained in the hydraulic fluid are also suctioned into the space S3 together with the hydraulic fluid. The bubbles V1 flowing into the space S3 from below the filtration section 10 flow in the +z direction and the -x direction along the flow of the hydraulic fluid, and abut on the air reservoir section 61a.

The bubbles V1 contained in the hydraulic fluid flowing into the space S2 and the space S3 from above or obliquely above the filtration section 10 hit the upper cover 61e, flow in the -x direction along the upper cover 61e, and abut on the air reservoir section 61a. Then, the bubbles V1 accumulate in a space above the air reservoir section 61a, and grow into the large bubbles V2.

The bubbles V2 accumulated above the baffle plate 61B are discharged to the space S1 via the filtration section 10 when the hydraulic pump 103 (not illustrated in FIG. 6) stops. When the bubbles V2 are discharged in the space S1, grow, and push up the float 52 in the +z direction, the holes of the cover 40 are opened, and air is released from the space S1 to the outside of the suction strainer 3.

According to the present embodiment, the bubbles V1 flowing into the space S3 can be prevented from flowing out from the suction strainer 3 provided along the horizontal direction by retaining the bubbles V2 in the space S3 by the baffle plate 61B. In addition, by providing the upper cover 61e, more bubbles V1 can be stored in the space above the air reservoir section 61a, and as a result, bubbles flowing out from the suction strainer 3 can be further reduced.

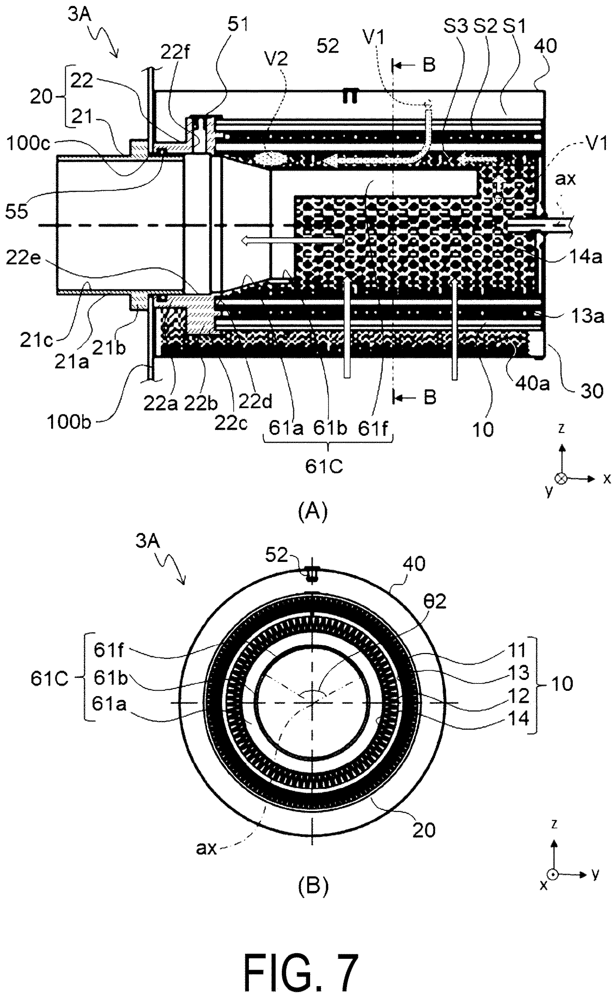

Note that in the present embodiment, the central angle θ1 of the upper cover 61e is approximately 90 degrees in the A-A cross section, but the central angle of the upper cover is not limited to this. FIG. 7 is schematic diagrams illustrating a suction strainer 3A having a baffle plate 61C according to a modification, where (A) is a cross-sectional view and (B) is a cross-sectional view of the suction strainer 3A taken along plane B-B. Note that FIG. 7 partially omits hatching indicating a cross section.

The difference between the suction strainer 3A and the suction strainer 3 is only the baffle plate 61C. The baffle plate 61C (corresponding to the first baffle plate of the present invention) mainly includes the air reservoir section 61a having a cylindrical shape, the extension cylinder 61b having a cylindrical shape, and an upper cover 61f.

The upper cover 61f is provided on the plate 30 more than the air reservoir section 61a. The difference between the upper cover 61f and the upper cover 60c is a central angle. In the B-B cross section, a central angle θ2 of the upper cover 61f is approximately 120 degrees.

Note that the central angle of the upper cover is not limited to 90 degrees or 120 degrees. Considering that the bubbles V1 float in the +z direction due to buoyancy, the upper cover may be provided so as to intersect a line segment connecting the upper end portion of the filtration section 10 and the central axis ax.

### Fourth Embodiment

In the first embodiment of the present invention, the baffle plate 61B includes the air reservoir section 61a, the extension cylinder 61b, and the upper cover 61e, but the form of the baffle plate is not limited to this. Below, description is given of a suction strainer 4 according to the fourth embodiment. Note that the same components as those in the first embodiment are denoted by the same reference numerals, and descriptions thereof will be omitted.

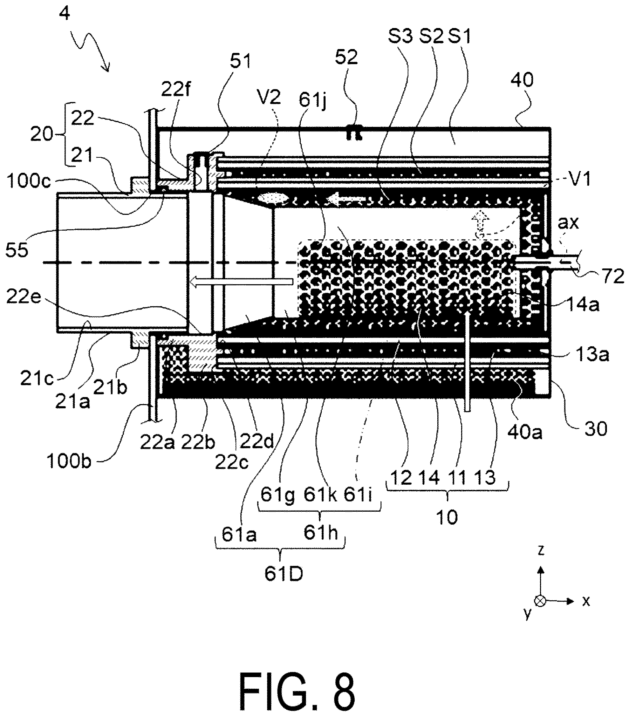

FIG. 8 is a cross-sectional view schematically illustrating a suction strainer 4. FIG. 8 partially omits hatching indicating a cross section.

The suction strainer 4 mainly includes the filtration section 10, the attachment section 20, the plate 30, the cover 40, the floats 51 and 52, a baffle plate 61D, and the attachment section 70 (partially not illustrated in FIG. 8).

The baffle plate 61D (corresponding to the first baffle plate of the present invention) is provided inside the filtration section 10. The baffle plate 61D has one end provided in the attachment section 20. The baffle plate 61D mainly includes the air reservoir section 61a having a cylindrical shape and an extension cylinder 61h having a cylindrical shape.

The extension cylinder 61h is provided on the plate 30 more than the air reservoir section 61a. The extension cylinder 61h has a band-shaped region 61i provided with a large number of holes 61j. The band-shaped region 61i is provided in a band shape along the x direction below (-z side) the extension cylinder 61h. The -x side of the band-shaped region 61i is a cylindrical portion 61g, and the +z side of the band-shaped region 61i is an upper cover 61k.

The upper cover 61k has a cross-sectional shape that is an arc shape when taken along a plane orthogonal to the central axis ax. The upper cover 61k is provided at a position intersecting a line segment connecting the upper end portion of the filtration section 10 and the central axis ax when taken along a plane orthogonal to the central axis ax.

Note that the position and shape of the band-shaped region 61i are not limited to this. For example, the cylindrical portion 61g is not essential. Although the central angle of the upper cover 61k is 120 degrees, the central angle is not limited to this.

According to the present embodiment, the bubbles V1 flowing into the space S3 can be prevented from flowing out from the suction strainer 4 provided along the horizontal direction by retaining the bubbles V2 in the space S3 by the baffle plate 61D. By providing the upper cover 61k, bubbles flowing out of the suction strainer 4 can be further reduced.

In addition, according to the present embodiment, since the upper cover 61k is a part of the extension cylinder 61h, the assembly work is facilitated.

### Fifth Embodiment

In the first embodiment of the present invention, the baffle plate 61 is provided inside the filtration section 10, but the form of the baffle plate is not limited to this. In a fifth embodiment of the present invention, a baffle plate is provided outside the pleated filter 12. Below, description will be given of a suction strainer 5 according to the fifth embodiment. Note that the same components as those in the first embodiment are denoted by the same reference numerals, and descriptions thereof will be omitted.

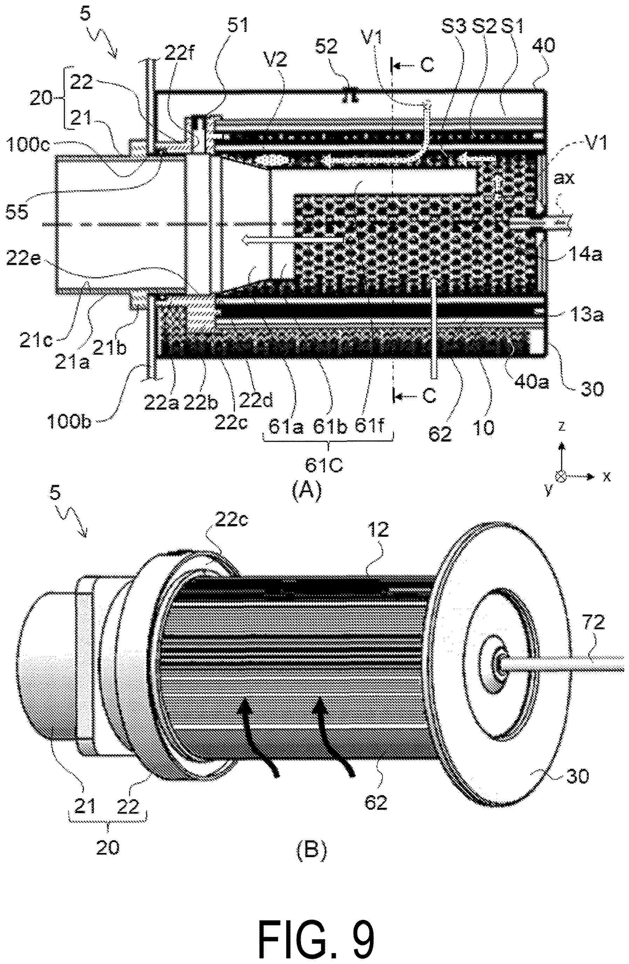

FIG. 9 is schematic diagrams illustrating a suction strainer 5, where (A) is a cross-sectional view and (B) is a perspective view. FIG. 9 partially omits hatching indicating a cross section. In FIG. 9(B), a part of the filtration section 10 and the cover 40 are omitted for the sake of description.

The suction strainer 5 mainly includes the filtration section 10, the attachment section 20, the plate 30, the cover 40, the floats 51 and 52, the baffle plate 61C and a baffle plate 62, and the attachment section 70 (partially not illustrated in FIG. 9).

The baffle plate 62 (corresponding to the second baffle plate of the present invention) is provided below (-z side) the pleated filter 12 and below the central axis ax. In the present embodiment, the baffle plate 62 is provided outside the pleated filter 12 and inside the pleated filter 11. The baffle plate 62 has the identical height to that of the filtration section 10, and has one end provided on the attachment section 20 and the other end provided on the plate 30.

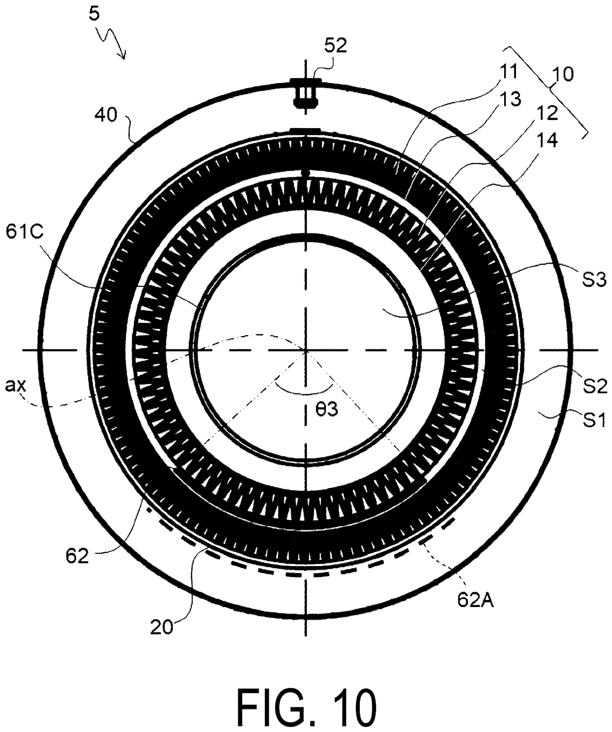

FIG. 10 is a cross-sectional view schematically illustrating the suction strainer 5 taken along plane C-C in FIG. 9(A). The baffle plate 62 is a lower cover having a cross-sectional shape that is an arc shape when taken along a plane (C-C plane) orthogonal to the central axis ax and provided at a position intersecting a line segment connecting the lower end portion of the filtration section 10 and the central axis ax. In the C-C plane, a central angle θ3 of the baffle plate 62 is approximately 90 degrees.

The baffle plate 62 is provided along the pleated filter 12 adjacent to the pleated filter 12. The baffle plate 62 is provided so as not to abut on the pleated filter 12.

Next, the function of the suction strainer 5 configured as described above will be described with reference to FIG. 9. After the suction strainer 5 is horizontally attached to the tank 100, the hydraulic fluid is stored in the tank 100.

Also regarding the suction strainer 5, similarly to the suction strainer 1, when suctioned by the hydraulic pump (not illustrated in FIG. 9), the hydraulic fluid stored in the tank 100 is suctioned into the space S3 from the outside of the cover 40 via the hole 40a and the filtration section 10, and flows out from the space S3 to the suction pipe 101 via the hollow portion 21c and the hollow portion 22e. In addition, the floats 51 and 52 are pulled in the -z direction together with the hydraulic fluid, the float 51 closes the air vent hole 22f, and the float 52 closes the hole of the cover 40. Due to this, the hydraulic fluid does not flow into the space S3 from a portion other than the hole 40a and the filtration section 10.

The bubbles V1 contained in the hydraulic fluid are also suctioned into the space S3 together with the hydraulic fluid. The hydraulic fluid flowing into the space S1 from the hole 40a and flowing into the space S2 from below the filtration section 10 is blocked by the baffle plate 62 and flows along the baffle plate 62 (see arrow in FIG. 9(B)). In particular, when the hydraulic fluid passes through the pleated filter 11 from below the filtration section 10, the bubbles V1 passing through the pleated filter 11 together with the hydraulic fluid are blocked by the lower side of the baffle plate 62, and therefore the bubbles V1 hardly flow into the space S3.

Even if the bubbles V1 flow into the space S3, the bubbles V1 flow in the +z direction and the -x direction along the flow of the hydraulic fluid, abut on the air reservoir section 61a, and grow to become the large bubbles V2. In addition, the bubbles V1 contained in the hydraulic fluid flowing into the space S2 and the space S3 from above or obliquely above the filtration section 10 also hit the upper cover 61f, flow in the -x direction along the upper cover 61f, abut on the air reservoir section 61a, and grow to become the large bubbles V2. The bubbles V2 are discharged into the space S1 via the filtration section 10 when the hydraulic pump (not illustrated in FIG. 9) stops.

According to the present embodiment, since the baffle plate 62 blocks the bubbles V1 and the bubbles V1 hardly flow into the space S3, it is possible to prevent inflow of the bubbles into the hollow portion (space S3) of the filtration section 10. Even if the bubbles V1 flow into the space S3, the baffle plate 61C can retain the bubbles V2 in the space S3. As a result, outflow of the bubbles from the suction strainer 5 can be prevented.

Note that in the present embodiment, the suction strainer 5 includes the baffle plate 61C and the baffle plate 62, but the baffle plate 61C is not essential. Even when the suction strainer 5 includes only the baffle plate 62, an effect of preventing outflow of bubbles from the suction strainer 5 can be achieved.

In the present embodiment, the baffle plate 62 is provided outside the pleated filter 12 and inside the pleated filter 11, but the position where the baffle plate (lower cover) is provided is not limited to this. The baffle plate (lower cover) may be provided below (-z side) the pleated filter 12 and below the central axis ax. For example, as a baffle plate 62A (corresponding to the second baffle plate of the present invention) in FIG. 10, the baffle plate 62A may be a lower cover provided outside the pleated filter 11.

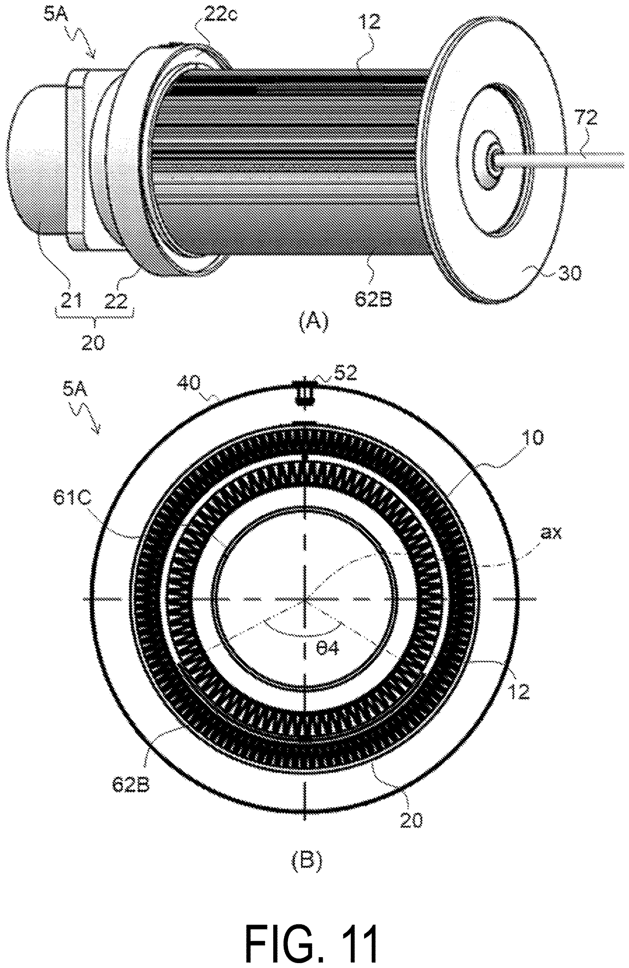

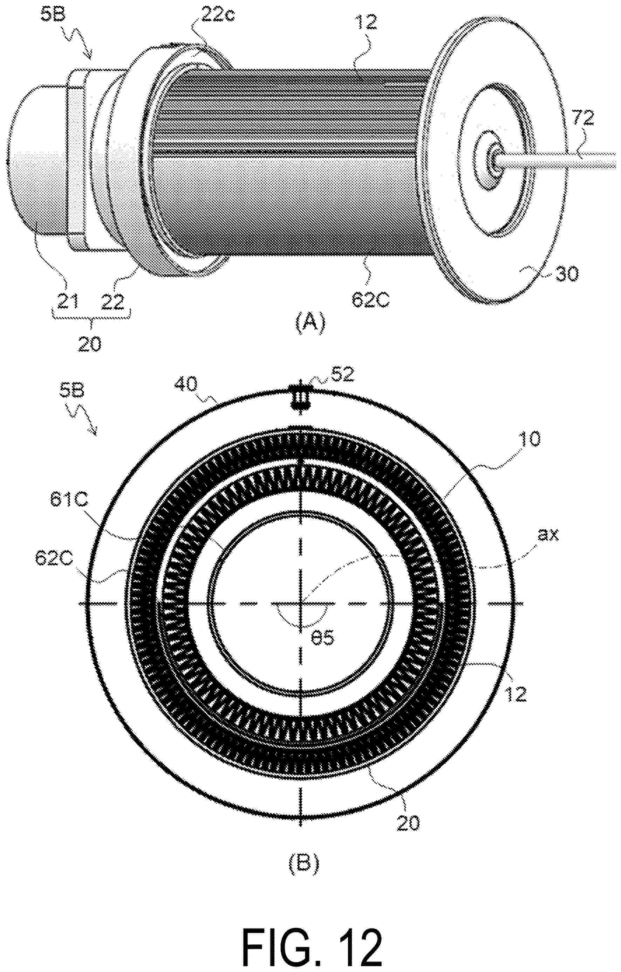

In addition, in the present embodiment, the central angle θ3 of the baffle plate 62 is approximately 90 degrees, but the central angle of the baffle plate (lower cover) is not limited to this. FIGS. 11 and 12 are schematic diagrams illustrating suction strainers 5A and 5B having baffle plates 62B and 62C according to a modification, where (A) are perspective views, and (B) are cross-sectional views when taken along a plane orthogonal to the central axis ax. Note that FIGS. 11 and 12 partially omit hatching indicating a cross section. In FIGS. 11(A) and 12(A), a part of the configuration is omitted.

Similarly to the baffle plate 62, the baffle plates 62B and 62C (both correspond to the second baffle plate of the present invention) are lower covers having a cross-sectional shape that is an arc shape when taken along a plane orthogonal to the central axis ax and provided at positions intersecting a line segment connecting the lower end portion of the filtration section 10 and the central axis ax. The baffle plates 62B and 62C are different from the baffle plate 62 only in the central angle. As illustrated in FIG. 11, a central angle θ4 of the baffle plate 62B is approximately 120 degrees, and as illustrated in FIG. 12, a central angle θ5 of the baffle plate 62C is approximately 180 degrees. That is, the baffle plate (lower cover) may be disposed at least below the central axis ax of the filtration section 10, and a part of the baffle plate (lower cover) may be disposed at the same height as the central axis ax.

### Sixth Embodiment

In the fifth embodiment of the present invention, the filtration section 10 includes the two pleated filters 11 and 12, but the number of pleated filters included in the filtration section 10 is not limited to this.

The sixth embodiment of the present invention is a form in which the filtration section includes one pleated filter. Below, description will be given of a suction strainer 6 according to the sixth embodiment. Note that the same components as those in the first embodiment are denoted by the same reference numerals, and descriptions thereof will be omitted.

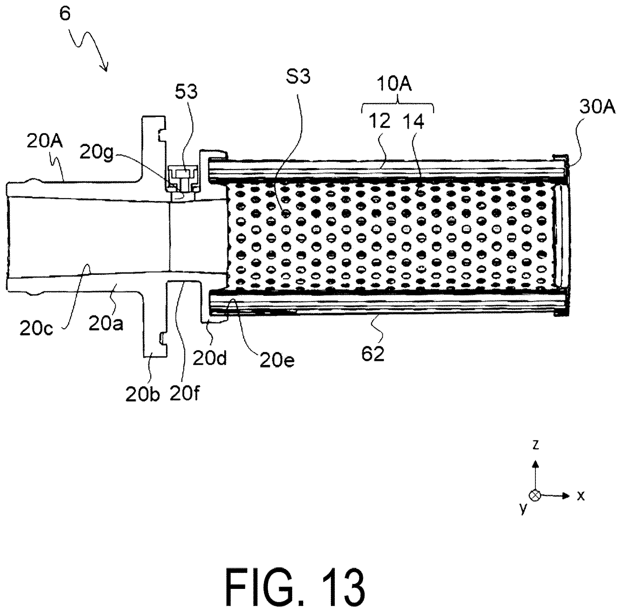

FIG. 13 is a cross-sectional view schematically illustrating a suction strainer 6. In FIG. 13, hatching for indicating a cross section is omitted.

The suction strainer 6 mainly includes the filtration section 10A, the attachment section 20A, the plate 30A, the float 53, and the baffle plate 62. The baffle plate 62 is provided along the pleated filter 12 adjacent to the pleated filter 12 of the filtration section 10A. The baffle plate 62 is provided so as not to abut on the pleated filter 12.

According to the present embodiment, the baffle plate 62 blocks the bubbles V1 and the bubbles V1 hardly flow into the space S3, whereby it is possible to prevent inflow of the bubbles into the hollow portion (space S3) of the filtration section 10A and to prevent outflow of the bubbles from the suction strainer 6 provided along the horizontal direction.

### Seventh Embodiment

In the first embodiment of the present invention, the bubbles V2 accumulated on the air reservoir section 61a are discharged via the filtration section 10 after the hydraulic pump is stopped, but the form of discharge of the bubbles V2 is not limited to this. The seventh embodiment of the present invention is a form in which the bubbles V2 are discharged via the air vent hole. A suction strainer 7 according to the seventh embodiment will be described below. Note that the same components as those in the first embodiment are denoted by the same reference numerals, and descriptions thereof will be omitted.

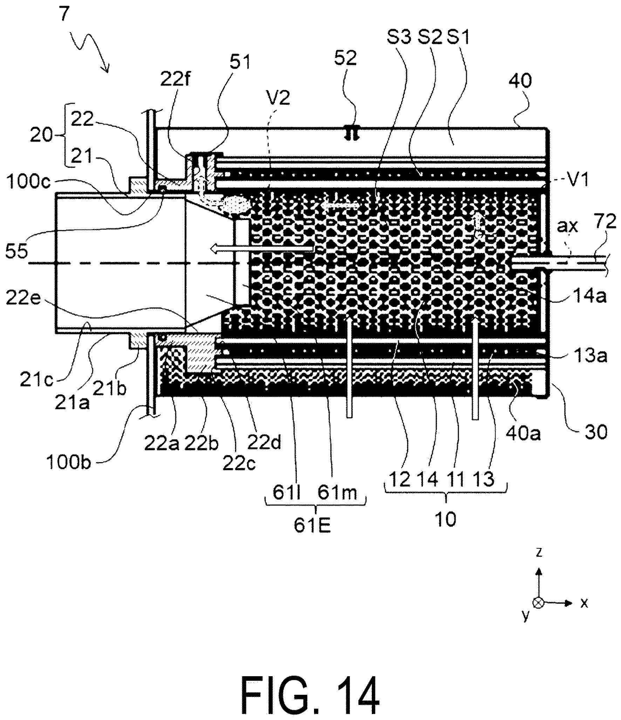

FIG. 14 is a cross-sectional view schematically illustrating a suction strainer 7. FIG. 14 partially omits hatching indicating a cross section.

The suction strainer 7 mainly includes the filtration section 10, the attachment section 20, the plate 30, the cover 40, the floats 51 and 52, a baffle plate 61E, and the attachment section 70 (partially not illustrated in FIG. 14).

The baffle plate 61E (corresponding to the first baffle plate of the present invention) is provided inside the filtration section 10. Similarly to the baffle plate 61, the baffle plate 61E includes an air reservoir section 61l having a cylindrical shape and an extension cylinder 61m having a cylindrical shape provided in the air reservoir section 61l.

The baffle plate 61E is inserted into the hollow portion 22e of the cylindrical portion 22a, and has one end provided in the cylindrical portion 21a. Therefore, the space above the air reservoir section 61l communicates with the air vent hole 22f.

Also in the suction strainer 7, similarly to the suction strainer 1, the bubbles V1 suctioned into the filtration section 10 together with the hydraulic fluid flow in the +z direction and the -x direction along the flow of the hydraulic fluid, and abut on the baffle plate 61E. Then, the bubbles V1 accumulate in a space above the baffle plate 61E (air reservoir section 61l), and grow into the large bubbles V2. When the bubbles V2 flow into the air vent hole 22f and push up the float 52 in the +z direction, the holes of the cover 40 are opened, and the bubbles V2 are released from the space S1 to the outside of the suction strainer 1.

According to the present embodiment, by blocking the bubbles V2 by the baffle plate 61E, it is possible to prevent outflow of the bubbles from the suction strainer 7 provided along the horizontal direction. By allowing the space above the air reservoir section 61l and the air vent hole 22f to communicate with each other, the bubbles V2 can be discharged into the space S1 even during operation (during operation of the hydraulic pump 103).

The embodiments of the invention are described above in detail with reference to the drawings. However, specific configurations are not limited to the embodiments and also include changes in design or the like without departing from the gist of the invention. For example, in the examples described above, detailed description is made to facilitate understanding of the present invention, and the examples are not necessarily limited to examples including all the configurations described above. In addition, the configuration of an embodiment can be replaced partially with the configurations of other embodiments. In addition, addition, deletion, replacement or the like of other configurations can be made on the configurations of the embodiments.

Additionally, in the present invention, "substantially" is a concept not only including the case of being strictly the same, but also including an error and deformation to the extent that a loss of identity does not occur. For example, the term "substantially orthogonal" is not limited to the case of being strictly orthogonal, but includes a concept that includes deviations of several degrees, for example. Further, simple expressions such as orthogonal, parallel, and identical are not to be understood as merely being strictly, for example, orthogonal, parallel, and identical, and include being, for example, substantially parallel, substantially orthogonal, and substantially identical.

Additionally, in the present invention, "vicinity" means to include a region in a certain range (the range can be determined arbitrarily) near a reference position. For example, the term "a vicinity of an end" refers to a range of regions in the vicinity of the end, and is a concept indicating that the end may or need not be included.

### Reference Signs List

1, 1A, 2, 3, 3A, 4, 5, 5A, 5B, 6, 7: Suction strainer
10, 10A: Filtration section
11, 12: Pleated filter
13, 14: Inner cylinder
13a, 14a: Hole
20, 20A: Attachment section
20a: Cylindrical portion
20b: Flange portion
20c: Hollow portion
20d: Attachment section
20e: Recess portion
20f: Cylindrical portion
20g: Air vent hole
21: First attachment section
21a: Cylindrical portion
21b: Flange portion
21c: Hollow portion
22: Second attachment section
22a: Cylindrical portion
22b: Plate-shaped portion
22c, 22d: Recess portion
22e: Hollow portion
22f: Air vent hole
30, 30A: Plate
40: Cover
40a: Hole
51, 52, 53: Float
55: Elastic member
60c: Upper cover
61, 61A, 61B, 61C, 61D, 61E: Baffle plate
61a, 61l: Air reservoir section
61b, 61m: Extension cylinder
61c: Air reservoir section
61d: Extension portion
61e, 61f: Upper cover
61g: Cylindrical portion
61h: Extension cylinder
61i: Band-shaped region
61j: Hole
61k: Upper cover
62, 62A, 62B, 62C: Baffle plate
70: Attachment section
71: Plate-shaped portion
72: Bar-shaped member
100: Tank
100a: Bottom surface
100b: Side surface
100c: Outflow port
100d: Side surface
101: Suction pipe
103: Hydraulic pump
110: Hydraulic circuit
150: Filtration section

## Claims

1. A suction strainer provided in a tank in which liquid is stored, the suction strainer comprising:
a filtration section having a cylindrical shape including a pleated filter having a cylindrical shape formed by bending a thin plate into a pleated shape;
an attachment section having a cylindrical shape provided on a side surface of the tank, the attachment section provided with one end of the filtration section;
a plate covering an end of the filtration section on a side not provided with the attachment section; and
a baffle plate including at least one of a first baffle plate provided inside the pleated filter and a second baffle plate provided outside the pleated filter,
wherein the filtration section is provided along a horizontal direction,
the filtration section and the plate are provided inside the tank,
at least a part of the first baffle plate is disposed above a central axis of the filtration section, and
at least a part of the second baffle plate is disposed below the central axis.

2. The suction strainer according to claim 1, wherein
the first baffle plate includes an air reservoir section having a cylindrical shape with one end provided in the attachment section, and
a radius of the air reservoir section gradually decreases along a direction from the attachment section toward the plate.

3. The suction strainer according to claim 1, wherein
the first baffle plate has a cross-sectional shape that is an arc shape when taken along a first plane orthogonal to the central axis, and includes an air reservoir section intersecting a line segment connecting an upper end portion of the filtration section and the central axis,
the air reservoir section has one end provided in the attachment section, and
a radius of the air reservoir section gradually decreases along a direction from the attachment section toward the plate.

4. The suction strainer according to claim 2 or 3, wherein
the first baffle plate includes an upper cover having a cross-sectional shape that is an arc shape when taken along a first plane orthogonal to the central axis, and provided at a position intersecting a line segment connecting an upper end portion of the filtration section and the central axis, and
the upper cover is provided on the plate side relative to the air reservoir section.

5. The suction strainer according to any one of claims 1 to 4, wherein
the second baffle plate is a lower cover having a cross-sectional shape that is an arc shape when taken along a first plane orthogonal to the central axis, and provided at a position intersecting a line segment connecting a lower end portion of the filtration section and the central axis.

6. The suction strainer according to any one of claims 1 to 5, wherein
the pleated filter includes a first pleated filter having a cylindrical shape and a second pleated filter having a cylindrical shape provided inside the first pleated filter,
the first baffle plate is provided inside the second pleated filter, and
the second baffle plate is provided outside the second pleated filter.

7. The suction strainer according to any one of claims 1 to 6, wherein
the attachment section is provided with an air vent hole allowing a hollow portion of the attachment section and an external space of the attachment section to communicate with each other, and
the air vent hole accommodates a float movable between a position where the float closes the air vent hole and a position where the float opens the air vent hole.

8. The suction strainer according to any one of claims 1 to 7 comprising:
a cover having a cylindrical shape with one end provided on the attachment section and another end provided on the plate,
wherein the cover is provided along a horizontal direction, and
a plurality of holes are provided in a belt-shaped region along a horizontal direction positioned in a vicinity of a lower end of the cover.
